# EUROPEAN PATENT APPLICATION

(11) **EP 1 529 446 A1**
(43) Date of publication of application: **11.05.2005**
(21) Application number: 04077921.7
(22) Date of filing: 25.10.2004
(51) Int. Cl.: A23L 2/06, A23L 1/30, A23L 1/302, A23L 1/304

(54) **Elixir**

(30) Priority: 05.11.2003 BE 200300592
(71) Applicant: Suik, Lambertus Cornelis, 2330 Merksplas (BE)
(72) Inventor: Suik, Lambertus Cornelis, 2330 Merksplas (BE)
(74) Representative: Donné, Eddy

(57) **Abstract**

Elixir, characterised in that it comprises at least the following five ingredients:
- lemon juice;
- silicon dioxide;
- magnesium citras dessicatus;
- ascorbic acid; and
- methyl sulphonyl methane.

## Description

The present invention concerns an elixir.

More specifically, it concerns an elixir which has a stimulating effect on the body and mind of the person taking the elixir.

The present invention aims to provide an elixir which gives the person taking the elixir more strength, optimism, joy of living and fitness.

The invention also aims to provide an elixir which is easy to prepare, as it is composed of a very limited number of ingredients.

To this end, the invention concerns an elixir which comprises at least the five following active ingredients:
- lemon juice;
- silicon dioxide;
- magnesium citras dessicatus;
- ascorbic acid; and
- methyl sulphonyl methane.

A major advantage is that the elixir has a preventive effect against diseases and all sorts of complaints. There is also a curative effect, as the elixir boosts the general condition of the body and thus helps to prevent diseases while the body is recovering after a disease or the like.

The human mind influences the body, and vice versa, the body influences the mind. By eliminating waste products from the body and improving the health condition, the intuitive power, or health intellect, increases, while the endless worrying will diminish.

Good, well-balanced and creative decisions are taken more easily. This is good in a society where unknown and new problems need to be solved at a high rate. A lot of new problems and reasonings can no longer be solved based on experience. This elixir helps to find new answers to new problems where experience no longer suffices.

According to a preferred characteristic of the invention, one and a half litre of elixir contains half a millilitre to 200 millilitre of lemon juice.

One and a half litre of elixir preferably contains 1 to 125 gram of silicon dioxide.

According to another preferred embodiment, one and a half litre of elixir contains half a gram to 125 gram of magnesium citras dessicatus.

One and a half litre of elixir preferably contains 1 to 280 gram of ascorbic acid or what is called vitamin C.

In a practical embodiment, one and a half litre of elixir 1 contains 1 to 100 gram of methyl sulphonyl methane.

The elixir already provides the aimed body and mind stimulating effect as of one shot glass a day.

In order to better explain the characteristics of the invention, the following preferred embodiment of an elixir according to the invention is described hereafter as an example only.

According to the most preferred embodiment, the elixir comprises per 1,5 litre of elixir:
- about 83 millilitre of lemon juice;
- about 4.5 gram of silicon dioxide;
- about 3 gram of magnesium citras dessicatus;
- about 21 gram of ascorbic acid; and
- about 21 gram of methyl sulphonyl methane.
83 ml of lemon juice can be obtained from a concentrate and corresponds more or less to the juice of 2.5 to 3 lemons.

The present invention is by no means limited to the embodiment given as an example; on the contrary, such an elixir according to the invention can be composed with different component concentrations.

## Claims

1. Elixir, **characterised in that** it comprises at least the following five ingredients:
- lemon juice;
- silicon dioxide;
- magnesium citras dessicatus;
- ascorbic acid; and
- methyl sulphonyl methane.

2. Elixir according to claim 1, **characterised in that** one and a half litre of elixir contains half a millilitre to 200 millilitre of lemon juice.

3. Elixir according to claim 1, **characterised in that** one and a half litre of elixir contains 1 to 125 gram of silicon dioxide.

4. Elixir according to claim 1, **characterised in that** one and a half litre of elixir contains half a gram to 125 gram of magnesium citras dessicatus.

5. Elixir according to claim 1, **characterised in that** one and a half litre of elixir contains 1 to 280 gram of ascorbic acid.

6. Elixir according to claim 1, **characterised in that** one and a half litre of elixir contains 1 to 100 gram of methyl sulphonyl methane.

7. Elixir according to claim 1, **characterised in that** one and a half litre of elixir contains about 83 millilitre of lemon juice.

8. Elixir according to claim 1, **characterised in that** one and a half litre of elixir contains about 4.5 gram of silicon dioxide.

9. Elixir according to claim 1, **characterised in that** one and a half litre of elixir contains about 3 gram of magnesium citras dessicatus.

10. Elixir according to claim 1, **characterised in that** one and a half litre of elixir contains about 21 gram of ascorbic acid.

11. Elixir according to claim 1, **characterised in that** one and a half litre of elixir contains about 21 gram of methyl sulphonyl methane.
